# EUROPEAN PATENT SPECIFICATION

(11) **EP 3 381 783 B1**
(45) Date of publication and mention of the grant of the patent: **09.08.2023**
(21) Application number: 18159975.4
(22) Date of filing: 05.03.2018
(51) Int. Cl.: B62J 25/08, B62J 9/14, B62K 19/46, B62J 6/04

(54) **SEAT CATCH MOUNTING STRUCTURE OF STRADDLE TYPE VEHICLE**
SITZVERRIEGELUNGSMONTAGESTRUKTUR EINES GRÄTSCHSITZFAHRZEUGS
STRUCTURE DE MONTAGE DE RETENUE DE SIÈGE POUR VÉHICULE À SELLE

(30) Priority: 31.03.2017 JP 2017072031
(43) Date of publication of application: 03.10.2018
(73) Proprietor: HONDA MOTOR CO., LTD., Tokyo 107-8556 (JP)
(72) Inventor: NAGAYAMA, Masashi, Saitama, 351-0193 (JP); MIYAJIMA, Yu, Saitama, 351-0193 (JP)
(74) Representative: Weickmann & Weickmann PartmbB

(56) References cited:
- EP-A2- 0 648 632
- CN-U- 201 825 159
- FR-A1- 2 738 544
- JP-A- 2003 237 656
- JP-B2- 5 865 883
- US-A1- 2003 112 633
- US-A1- 2013 249 233

## Description

### BACKGROUND OF THE INVENTION

### Field of the Invention

The present invention relates to a seat catch mounting structure of a straddle type vehicle.

### Description of the Related Art

Japanese Patent No. JP 4131590 B2 describes a structure in which a seat catch configured to lock opening/closing of a seat is mounted on a battery storage portion adjacent to a storage box that can be opened/closed by the seat, the seat catch is covered with a seat catch cover, and the seat catch cover is covered with a seat undercover.

In Japanese Patent No. JP 4131590 B2, the seat catch is mounted on a vehicle body frame by inserting a mounting leg into a bolt hole formed in the battery storage portion, and the seat catch cover is engaged with the battery storage portion. Hence, a sufficient space cannot be ensured because of the hole provided in the storage portion, and the operation of mounting the mounting leg through the hole takes time and effort. FR 2 738 544 A1 discloses a seat catch mounting structure of a straddle type vehicle a storage portion is provided under a seat, and the storage portion is openable/closable by the seat, a seat catch mechanism is configured to hold the seat in a lock state in which opening/closing of the seat is disabled or in a lock cancel state in which the lock state is canceled is provided, the seat catch mechanism is covered with a seat catch cover, the seat catch cover is arranged between fairings provided on an upper side of a vehicle body rear portion, and a tail light unit provided on a rear side of the vehicle body rear portion, an upper surface portion of the seat catch cover is surrounded by a part of the side fairings, and a lower surface portion of the seat catch cover is arranged close to a fuel tank disposed forwardly of the tail light unit.

JP 5865883 B2 shows a seat catch mounting structure according to the preamble of claim 1.

### SUMMARY OF THE INVENTION

The present invention has been made in consideration of the above problem, and realize a seat catch mounting structure of a straddle type vehicle, which improves an anti-theft effect by covering a seat catch mechanism with a seat catch cover so the seat catch mechanism is not directly visible from the outside.

In order to solve the above problem, according to the first aspect of the present invention, there is provided a seat catch mounting structure of a straddle type vehicle according to claim 1 and further specified in the appended claims.

### BRIEF DESCRIPTION OF THE DRAWINGS

Fig. 1 is a side view showing the overall outer appearance of a motorcycle according to the embodiment;
Fig. 2 is a view showing the outer appearance of the motorcycle according to the embodiment viewed from the left rear side in a state in which the seat is located at a first opening position;
Fig. 3 is a view showing the outer appearance of the motorcycle according to the embodiment viewed from the left rear side in a state in which the seat is located at a second opening position;
Fig. 4 is a view showing the outer appearance of the vehicle body rear portion of the motorcycle according to the embodiment;
Fig. 5 is an enlarged view of an article storage portion on the lower surface of the seat in Fig. 3 in a state in which no article is stored;
Fig. 6 is an enlarged view of the article storage portion on the lower surface of the seat in Fig. 3 in a state in which an article is stored;
Fig. 7 is a sectional view of a seat front end including a seat hinge mechanism and the article storage portion according to the embodiment;
Fig. 8A shows a side view showing the states of the hinge mechanism in states in which the seat according to the embodiment is located at a closed position;
Fig. 8B shows a side view showing the states of the hinge mechanism in states in which the seat according to the embodiment is located at a first opening position;
Fig. 8C shows a side view showing the states of the hinge mechanism in states in which the seat according to the embodiment is located at a second opening position;
Fig. 9A shows a sectional view taken along a line i - i in Fig. 8B;
Fig. 9B shows a sectional view taken along a line ii - ii in Fig. 8B;
Fig. 10A shows a view showing a seat catch mechanism according to the embodiment;
Fig. 10B shows a view showing a state in which the seat catch mechanism is covered with a seat catch cover;
Fig. 11 is a view showing the positional relationship between the seat catch cover of the seat catch mechanism, a grab rail, and a tail light unit according to the embodiment;
Fig. 12A shows a sectional view taken along a line iii - iii in Fig. 4;
Fig. 12B shows an enlarged view of Fig. 12A;
Fig. 13A shows a view of the outer appearance of the grab rail provided in the vehicle body rear portion according to the embodiment;
Fig. 13B shows a side view of the grab rail according to the embodiment;
Fig. 13C shows a side sectional view of the grab rail according to the embodiment;
Fig. 14A shows a view of the outer appearance of the seat catch cover of the seat catch mechanism according to the embodiment viewed from the front side;
Fig. 14B shows a view of the outer appearance of the seat catch cover of the seat catch mechanism according to the embodiment viewed from the back side.

### DESCRIPTION OF THE EMBODIMENTS

An embodiment in which a straddle type vehicle according to the present invention is applied to a scooter type motorcycle will now be described in detail with reference to the accompanying drawings.

### [Overall Structure]

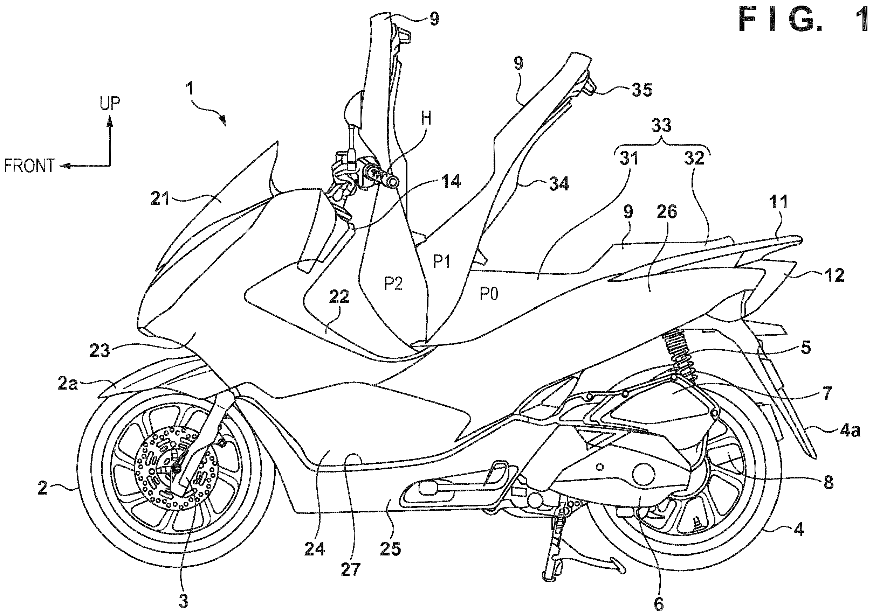

First, the overall structure of the motorcycle according to this embodiment will be described with reference to Figs. 1 to 4.

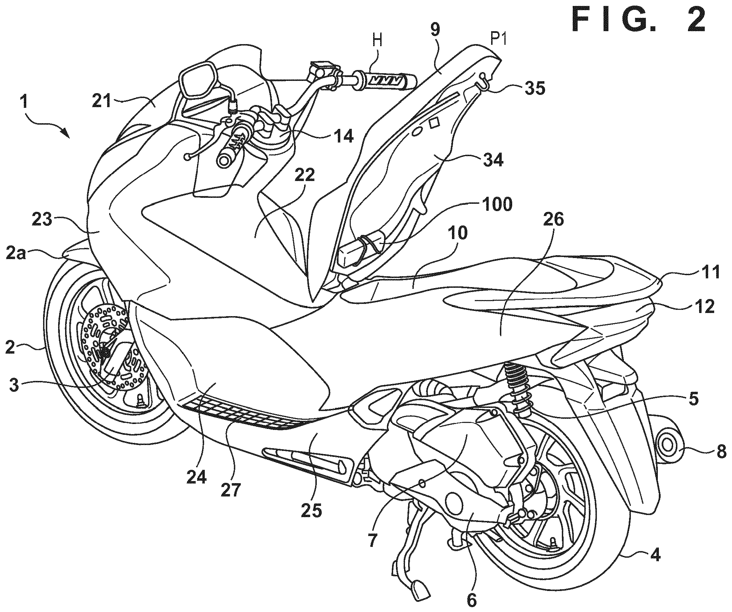

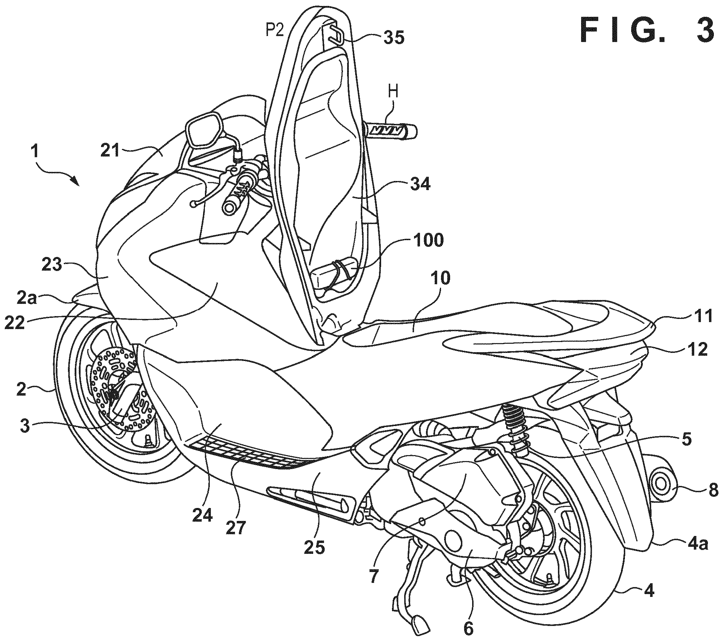

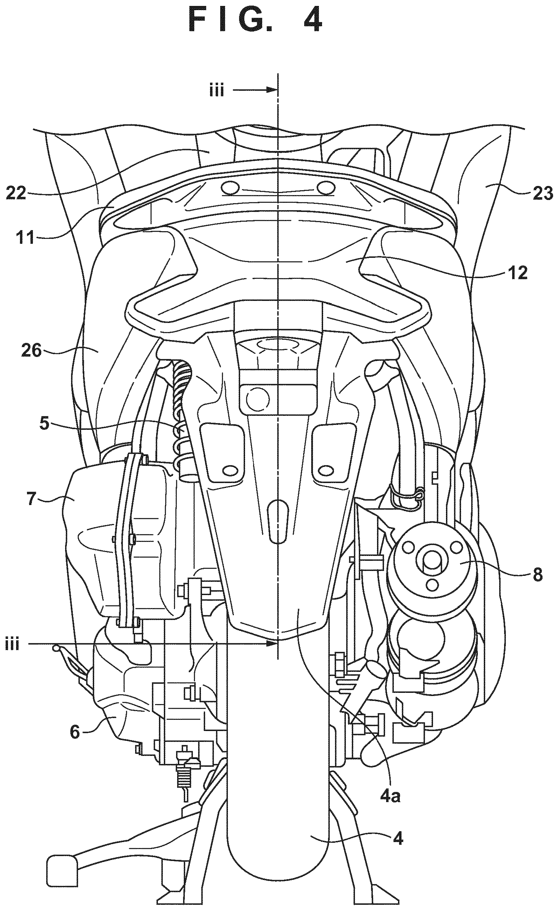

Fig. 1 is a side view showing the overall outer appearance of the motorcycle according to this embodiment. Fig. 2 is a view showing the outer appearance of the motorcycle according to this embodiment viewed from the left rear side in a state in which the seat is located at a first opening position. Fig. 3 is a view showing the outer appearance of the motorcycle according to this embodiment viewed from the left rear side in a state in which the seat is located at a second opening position. Fig. 4 is a view showing the outer appearance of the vehicle body rear portion of the motorcycle according to this embodiment.

As shown in Figs. 1 to 4, a motorcycle 1 according to this embodiment is a scooter type motorcycle. The vehicle body front portion is covered with a metervisor 21, a front inner cover 22, and left and right front side covers 23 so vehicle body components except a front wheel (including a brake disc) 2, a front fender 2a that coverts the upper portion of the front wheel 2, a pair of left and right front forks 3 that support the front wheel 2, a handle H, and the like are not visible from the outside.

The vehicle body center portion and the vehicle body rear portion are also covered with left and right step floor covers 24, left and right floor side covers 25, and left and right rear side covers 26 so vehicle body components except a rear wheel 4, a rear fender 4a that coverts the upper portion of the rear wheel 4, a pair of left and right rear suspensions 5 that support the rear wheel 4, a power train 6, an air cleaner 7, a muffler 8, and the like are not visible from the outside. Step floors 27 serving as footrests on which a rider places the feet are provided on the left and right step floor covers 24 and floor side covers 25. The left and right rear side covers 26 are provided to surround a seat 9. In addition, a tail light unit 12 including a brake lamp and turn signal lamps is provided at the rear ends of the left and right rear side covers 26. Furthermore, a grab rail 11 is provided on the upper portions of the left and right rear side covers 26. Note that the above-described cover members are made of an elastic resin with low rigidity.

In addition, a vehicle body frame (not shown) that forms the framework of the motorcycle 1 including a main frame, a rear frame, and the like extends in the longitudinal direction of the vehicle body, and the vehicle body frame is covered with the above-described cover members. The seat 9 is provided at the vehicle body center portion. A luggage box 10 that is openable/closable by the seat 9 is provided under the seat 9. A battery (not shown) is arranged in the luggage box 10, and additionally, a storage article such as a helmet can be stored there.

The seat 9 includes a first seat surface 31 on which the driver sits, and a second seat surface 32 provided on the rear side of the first seat surface 31, on which a pillion passenger sits. The second seat surface 32 is arranged at a position higher than the first seat surface 31. The seat 9 includes a seat cushion portion 33 that forms the first seat surface 31 and the second seat surface 32, and a seat base plate portion 34 that is provided on the lower surface of the seat cushion portion 33 and supports the seat cushion portion 33. The front end of the seat base plate portion 34 is supported by a hinge mechanism 50 (to be described later) to be opened/closed with respect to a vehicle body-side component 13 connected to the vehicle body frame around the luggage box 10. In addition, the seat base plate portion 34 is provided with a seal rubber 36 that seals between the seat base plate portion 34 and an opening edge 10a of the luggage box 10 when the seat 9 is located at the closed position. The grab rail 11 is mounted to surround the periphery of the rear portion (second seat surface 32) of the seat 9. The grab rail 11 functions as a grip to be grasped by a pillion passenger sitting on the second seat surface 32 when traveling in riding double or the like. The tail light unit 12 is provided on the lower side of the grab rail 11.

The seat 9 has a lock state in which an anchor portion 35 provided at the rear end of the seat base plate portion 34 is locked by a seat catch mechanism 70 (to be described later), and an unlock state in which the lock state is canceled to enable opening/closing. In the lock state, the seat 9 is locked by the seat catch mechanism 70 to be described later so it cannot be opened/closed. The lock state can be canceled by inserting a key into a main switch (not shown) provided on the periphery of a handle cover 14 and performing a predetermined lock cancel operation. Since opening/closing of the luggage box 10 is thus disabled or enabled by setting the seat 9 in the lock state or the lock cancel state (unlock state), the user can store various articles as needed.

The opening operation of the seat 9 can be performed by the hinge mechanism 50 (to be described later) in two steps to a first opening position P1 and a second opening position P2 in accordance with the application purpose. At the first opening position P1, for example, the seat opens by an angle of about 45° from a closed position P0 to the front side with respect to the hinge mechanism 50 as the center. At the second opening position P2, for example, the seat opens by an angle of about 80° from the closed position P0 to the front side with respect to the hinge mechanism 50 as the center. It can be said that at the second opening position P2, the seat opens further by an angle of about 35° from the first opening position P1 to the front side.

### <Structure of Article Storage Portion>

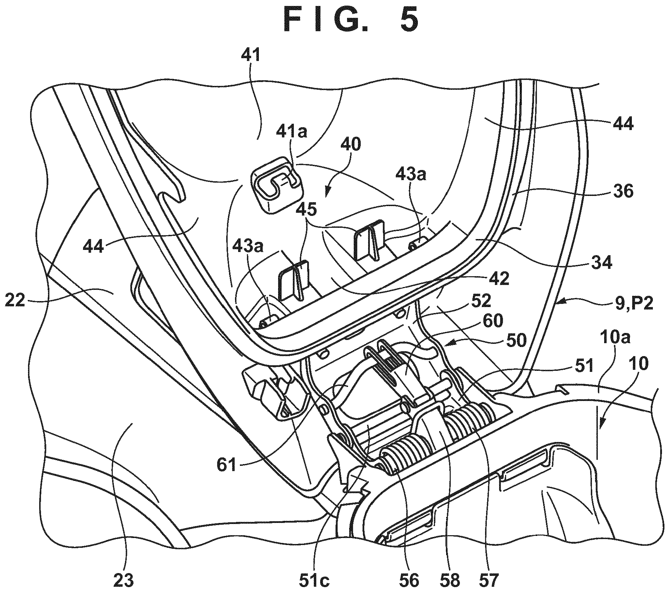

A detailed structure of an article storage portion provided on the lower surface of the seat according to this embodiment will be described next with reference to Figs. 5 to 7 in addition to Figs. 1 to 4.

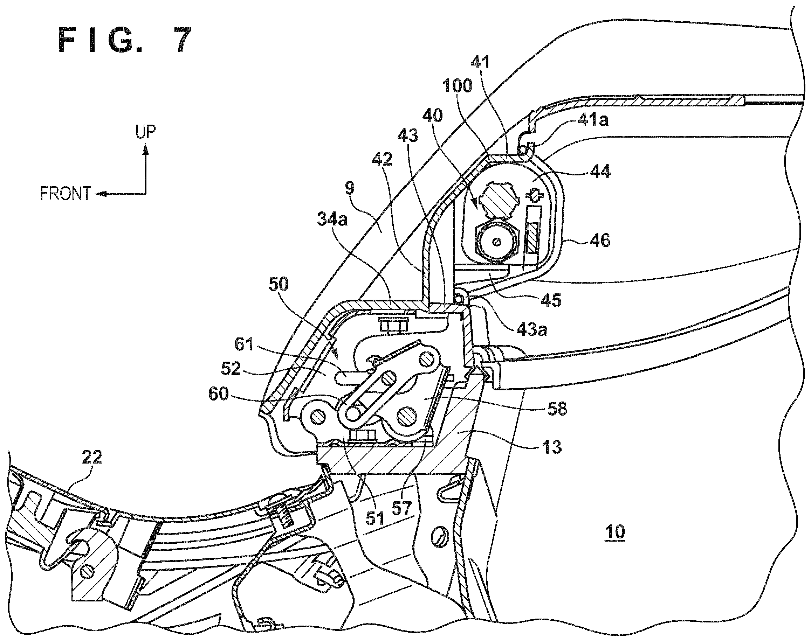

An article storage portion 40 capable of storing an article 100 such as a tool storage bag or a tool storage box is provided in the seat base plate portion 34 on the lower surface of the seat 9. As shown in Fig. 7, the article storage portion 40 is provided near the hinge mechanism 50 mounted at the front end of the seat base plate portion 34, and forms a space portion recessed to the side of the seat cushion portion 33 (upper side) and opening downward. As shown in Fig. 7, in a side view of the vehicle body (in a section obtained when the center of the seat 9 in the vehicle width direction is cut in the longitudinal direction of the vehicle body), the article storage portion 40 is arranged such that an upper surface portion 34a of the seat base plate portion 34 on which a seat-side hinge portion 52 of the hinge mechanism 50 (to be described later) is mounted and a lower surface portion 43 of the article storage portion 40 partially overlap. In addition, the article storage portion 40 is arranged almost at the center in the longitudinal direction and the vertical direction of the vehicle body in the side view of the vehicle.

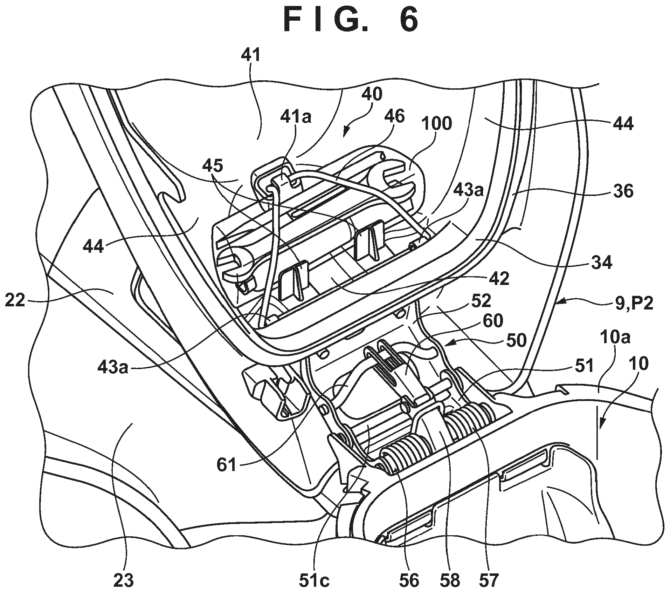

The article storage portion 40 includes an upper surface portion 41, a front surface portion 42, the lower surface portion 43, and a side surface portion 44 in the side view of the vehicle in a state in which the seat 9 is closed. A pair of left and right plate-shaped holding portions 45 on which the article 100 is placed stand on the front surface portion 42. In a state in which the seat 9 is located at the closed position P0 or the first opening position P1, the article 100 is stored in the space portion formed by the upper surface portion 41, the front surface portion 42, the lower surface portion 43, and the side surface portions 44 in a state in which the article 100 is held by the holding portions 45. Additionally, in a state in which the seat 9 is located at the second opening position P2 (Fig. 6), the article storage portion 40 opens backward and upward with the upper surface portion 41 located on the front side and the front surface portion 42 located on the lower side, and serves as an outlet that allows the article 100 to be extracted from the upper side while preventing it from dropping even in a state in which the article 100 is not held by a restraint member 46 such as a rubber band. The article 100 stored in the article storage portion 40 is held by the restraint member 46 such as a rubber band so as not to drop from the outlet. In a state in which the article 100 is held, the restraint member 46 is engaged with a first engaging portion 41a provided on the upper surface portion 41 of the article storage portion 40 and a pair of left and right second engaging portions 43a provided on the lower surface portion 43. Note that the restraint member 46 is not limited to a rubber band and may be a cord or wire as long as it is a member capable of fixing the article 100 without making it drop from the article storage portion 40.

According to this embodiment, the article storage portion 40 is provided on the lower surface of the seat 9, and the article storage portion 40 is arranged such that the lower surface portion 43 partially overlaps the upper surface portion 34a of the hinge mechanism 50. In addition, the article storage portion 40 holds the article 100 near the front surface portion 42 in a state in which the seat 9 is closed, that is, a portion where the seat 9 is mounted on the hinge mechanism 50. This makes it possible to effectively use the space under the seat and expand the storage space of the luggage box 10. In addition, since the article storage portion 40 is provided near the hinge mechanism 50, the weight of the seat 9 near the hinge mechanism 50 increases, and the operation at the time of opening/closing stabilizes.

Furthermore, in a state in which the seat 9 is open, the front surface portion 42 becomes the lower surface, and the article storage portion 40 forms an outlet that allows the article 100 to be extracted from the upper side. Since the article storage portion 40 is thus arranged such that the outlet is directed upward when the seat 9 is opened, the article 100 can easily be put in and taken out without dropping.

In addition, the article 100 is held in the article storage portion 40 by the restraint member 46 so as not to drop from the outlet. The plurality of engaging portions 41a and 43a configured to engage with the restraint member 46 are provided in the article storage portion 40. When the movement of the article 100 stored in the article storage portion 40 is thus suppressed, the vibration of the article 100 at the time of traveling of the vehicle can be reduced.

Moreover, the article storage portion 40 is provided with the holding portions 45 that hold the article 100 on the front surface portion 42 of the article storage portion 40 in a state in which the seat 9 is closed. Since the article 100 can be placed on the holding portions 45 in this way, the article 100 can be stably held and easily put in and taken out.

In addition, the article storage portion 40 is provided almost at the center in the longitudinal direction and vertical direction of the vehicle body in the side view of the vehicle body. Accordingly, since the weight of the article is applied to almost the center of the vehicle body, the article 100 can be stored without deteriorating the weight balance of the vehicle body.

### <Structure of Hinge Mechanism>

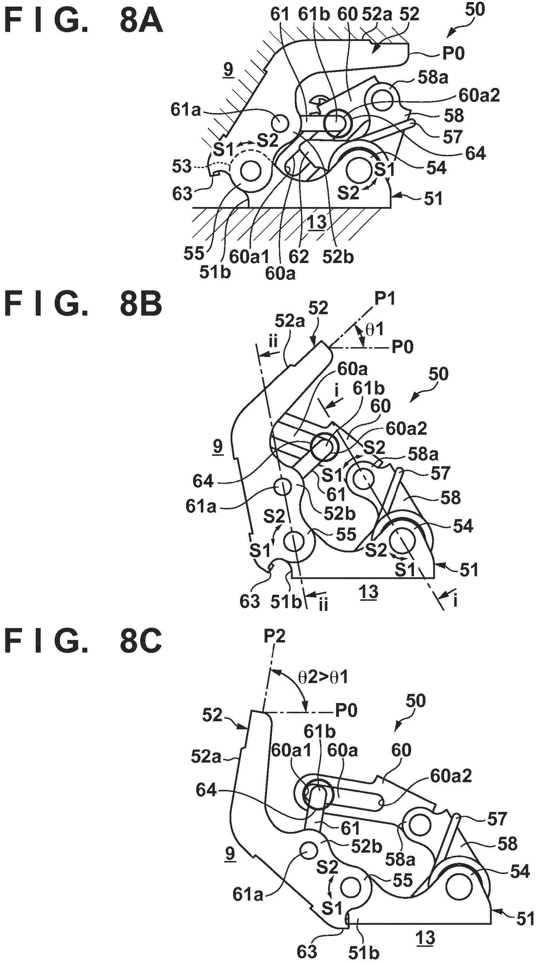

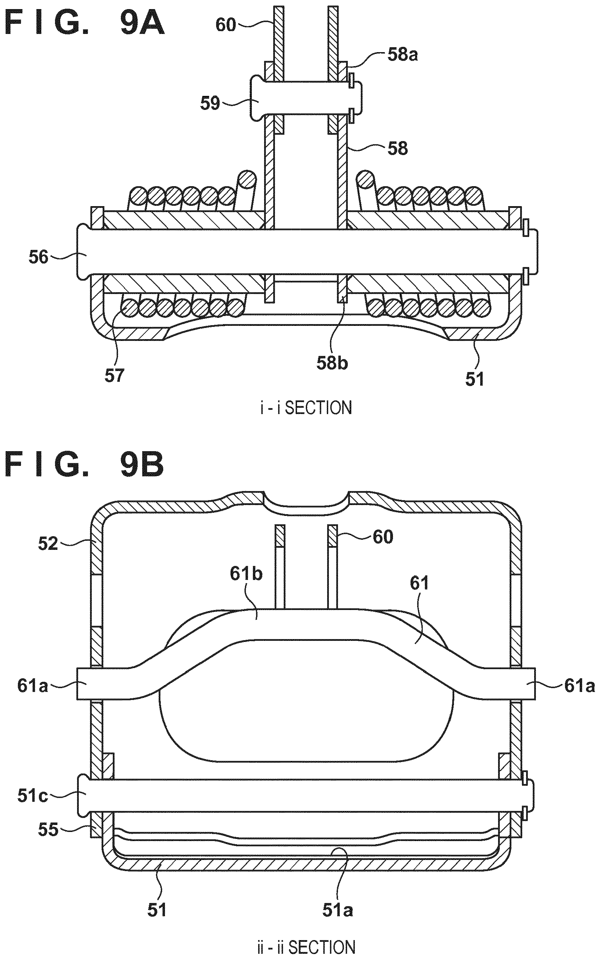

A detailed structure of the hinge mechanism 50 that supports the seat according to this embodiment to allow it to be opened/closed will be described next with reference to Figs. 8A-8C and 9A-9B in addition to Figs. 5 to 7.

Fig. 8A shows a side view showing the states of the hinge mechanism in states in which the seat according to the embodiment is located at a closed position. Fig. 8B shows a side view showing the states of the hinge mechanism in states in which the seat according to the embodiment is located at a first opening position. Fig. 8C shows a side view showing the states of the hinge mechanism in states in which the seat according to the embodiment is located at a second opening position. Fig. 9A shows a sectional view taken along a line i - i in Fig. 8B. Fig. 9B shows a sectional view taken along a line ii - ii in Fig. 8B.

Referring to Figs. 8A-8C and 9A-9B, the hinge mechanism 50 is provided at the front end of the seat base plate portion 34 near the above-described article storage portion 40, and can open/close the seat 9 to the closed position P0, the first opening position P1, and the second opening position P2.

As shown in Fig. 7, the hinge mechanism 50 includes a vehicle body-side hinge portion 51 mounted on the vehicle body-side component 13, and a seat-side hinge portion 52 mounted on the seat side (the upper surface portion 34a of the seat base plate portion 34).

The vehicle body-side hinge portion 51 has a rectangular outer shape in a front view, and includes a first vehicle body-side axial support portion 53 and a second vehicle body-side axial support portion 54. A seat-side axial support portion 55 of the seat-side hinge portion 52 on the opposite side of a seat mounting portion 52a is pivotally axially supported by the first vehicle body-side axial support portion 53 via a first rotating shaft 51c.

In addition, the hinge mechanism 50 includes a first arm portion 58 pivotally axially supported by the second vehicle body-side axial support portion 54 of the vehicle body-side hinge portion 51 via a second rotating shaft 56 and a helical torsion spring 57, a second arm portion 60 pivotally axially supported by a first arm axial support portion 58a of the first arm portion 58 on the opposite side of the vehicle body-side hinge portion 51 via a first arm shaft 59, and a link portion 61 that connects the second arm portion 60 and the seat-side hinge portion 52. The link portion 61 includes a shaft body bent from a center portion 61b toward ends 61a and thus has an axially symmetrical shape.

In the first arm portion 58, the helical torsion spring 57 always applies a spring force in a first direction S1 in which the opening operation of the seat 9 is performed. In the first direction S1, the first arm portion 58 rotates by the action of the spring force generated by the torsion of the helical torsion spring 57. In a second direction S2 reverse to the first direction S1, the first arm portion 58 rotates against the spring force generated by the torsion of the helical torsion spring 57. Additionally, the first arm portion 58 is provided with a first restriction portion 62 which projects from a second arm axial support portion 58b of the first arm portion 58 axially supported by the vehicle body-side hinge portion 51 and whose rotation in the first direction S1 is restricted to a first angle Θ1. When the first restriction portion 62 rotates in the first direction S1 together with the first arm portion 58 and abuts against a flat portion 51a of the vehicle body-side hinge portion 51, further rotation is restricted.

The seat-side hinge portion 52 has a rectangular outer shape in a front view and an outer shape bent in a V shape from the center portion in a side view of the vehicle body, and is provided with a second restriction portion 63 which projects from the seat-side axial support portion 55 and whose rotation in the first direction S1 is restricted to a second angle θ2. When the second restriction portion 63 rotates in the first direction S1 together with the link portion 61 and abuts against an abutment portion 51b of the first vehicle body-side axial support portion 53 of the vehicle body-side hinge portion 51, further rotation is restricted.

In addition, a projecting portion 52b projecting toward the first arm portion 58 is provided between the seat-side axial support portion 55 and the seat mounting portion 52a of the seat-side hinge portion 52. The ends 61a of the link portion 61 are pivotally axially supported by the projecting portion 52b. The center portion 61b of the link portion 61 is slidably supported by a shaft hole 60a formed in the second arm portion 60. The shaft hole 60a is a linear long hole formed along the longitudinal direction of the second arm portion 60.

In the hinge mechanism 50 with the above structure, in a state in which the seat 9 is located at the closed position P0 (angle θ = 0°), as shown in Fig. 8A, the seat-side hinge portion 52 is rotated in the second direction S2 with respect to the first rotating shaft 51c as the center. Hence, since the center portion 61b of the link portion 61 (a connecting position 64 to the second arm portion 60) slides in the shaft hole 60a of the second arm portion 60 from one end 60a1 to the other end 60a2, and the center portion 61b of the link portion 61 functions to push down the second arm portion 60, the second arm portion 60 is folded to the side of the first arm portion 58 with respect to the first arm shaft 59 as the center, and the first arm portion 58 rotates against the spring force generated by the torsion of the helical torsion spring 57 and stops.

When the seat 9 is raised from the state shown in Fig. 8A and opened to the first opening position P1, the hinge mechanism 50 is set in a state shown in Fig. 8B. When the seat 9 moves to the first opening position P1, the seat-side hinge portion 52 rotates in the first direction S1 so as to separate from the vehicle body-side hinge portion 51 with respect to the first rotating shaft 51c as the center. Hence, the ends 61a of the link portion 61 are pulled by the projecting portion 52b of the seat-side hinge portion 52 and rotate, and the center portion 61b of the link portion 61 (the connecting position 64 to the second arm portion 60) moves upward while remaining located at the position of the other end 60a2 of the shaft hole 60a of the second arm portion 60 to rotate the second arm portion 60 in the second direction S2 so that the second arm portion 60 separates from the first arm portion 58. Then, along with the rotation of the second arm portion 60, the first arm portion 58 receives the spring force generated by the torsion of the helical torsion spring 57 and rotates in the first direction S1, and the first restriction portion 62 abuts against the flat portion 51a of the vehicle body-side hinge portion 51. Accordingly, since the spring force acts when the seat 9 is opened from the closed position, the seat 9 can be raised by a small force.

In the state shown in Fig. 8B, by the spring force generated by the torsion of the helical torsion spring 57, the first restriction portion 62 holds the state in which it abuts against the vehicle body-side hinge portion 51, and the seat-side hinge portion 52 is held at the first opening position P1 rotated from the closed position in Fig. 8A by the first angle Θ1 with respect to the first rotating shaft 51c as the center.

Then, when the seat 9 is further opened from the state shown in Fig. 8B to the second opening position P2, the hinge mechanism 50 is set in a state shown in Fig. 8C. When the seat 9 moves to the second opening position P2, the seat-side hinge portion 52 further rotates in the first direction S1 with respect to the first rotating shaft 51c as the center. Hence, the ends 61a of the link portion 61 are pulled by the projecting portion 52b of the seat-side hinge portion 52 and rotate, the center portion 61b of the link portion 61 (the connecting position 64 to the second arm portion 60) slides in the shaft hole 60a of the second arm portion 60 from the other end 60a2 to the one end, and the second restriction portion 63 abuts against the abutment portion 51b of the vehicle body-side hinge portion 51.

In the state shown in Fig. 8C, by the spring force generated by the torsion of the helical torsion spring 57, the first restriction portion 62 holds the state in which it abuts against the flat portion 51a of the vehicle body-side hinge portion 51, and the seat-side hinge portion 52 has the second restriction portion 63 abutting against the abutment portion 51b of the vehicle body-side hinge portion 51, and is held at the second opening position P2 rotated from the closed position by the second angle Θ2 with respect to the first rotating shaft 51c as the center.

According to this embodiment, at the time of opening/closing of the seat 9, the spring force is applied around the second rotating shaft 56 of the vehicle body-side hinge portion 51 of the hinge mechanism 50. Hence, when opening the seat 9, the seat 9 can be raised in a state in which the weight of the seat 9 is reduced by the spring force. Conversely, when closing the seat 9, the weight of the seat 9 enables to push it down by a small force against the spring force. In addition, the opening of the seat 9 can be adjusted stepwise by applying a necessary spring force around the second rotating shaft 56 of the vehicle body-side hinge portion 51. Furthermore, since a component thinner than before can be used as the seal rubber 36 that seals between the seat lower surface and the luggage box 10 at the closed position P0 of the seat 9 without increasing the mounting rigidity of the seat 9 or the hinge mechanism 50, the component cost can be suppressed.

Additionally, when the seat-side hinge portion 52 is rotated in the first direction S1 by the first angle θ1, the rotation of the first arm portion 58 in the first direction S1 is restricted, and the link portion 61 rotates the second arm portion 60 in the second direction S2 and holds the seat-side hinge portion 52 at the first angle Θ1. When the seat-side hinge portion 52 is further rotated in the first direction S1 from the first angle θ1, the link portion 61 slides relative to the shaft hole 60a of the second arm portion 60 and holds the seat-side hinge portion 52 at the second opening position P2 rotated by the second angle Θ2. Furthermore, the first arm portion 58 includes the first restriction portion 62 whose rotation in the first direction S1 is restricted, and the seat-side hinge portion 52 includes the second restriction portion 63 whose rotation in the first direction S1 is restricted to the second angle Θ2.

Since this makes it possible to adjust the state in which the seat 9 is opened in two steps in accordance with the application purpose or form of an article to be put in or taken out from the luggage box 10, the convenience is improved. In addition, since it is possible to raise the seat 9 and hold the open state more lightly than before, the position adjustment of the seat can easily be performed.

In addition, the article storage portion 40 is provided on the lower surface of the seat 9, and the article storage portion 40 is arranged to partially overlap the upper surface portion 34a of the seat-side hinge portion 52. When the hinge mechanism 50 and the article storage portion 40 partially overlap in this way, the space on the seat lower surface can effectively be used.

### <Blindfold Structure of Seat Catch Mechanism 70>

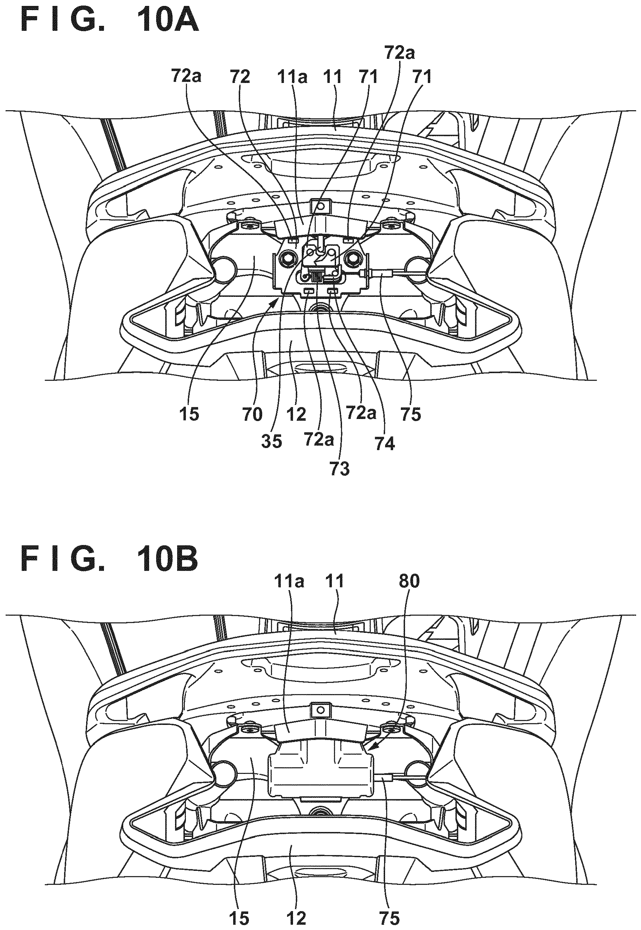

The blindfold structure of the seat catch mechanism 70 according to this embodiment will be described next with reference to Figs. 10A-10B to 14A-14B.

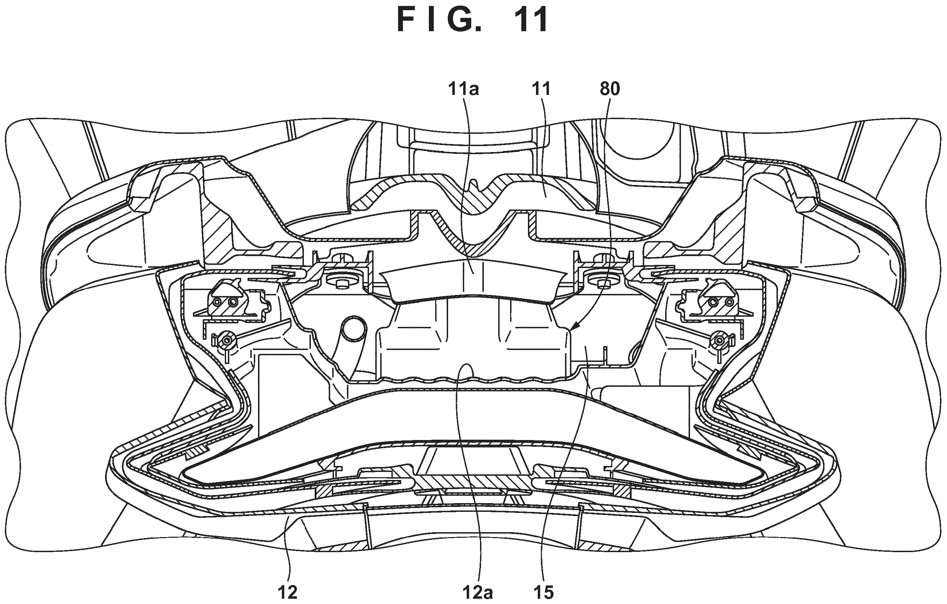

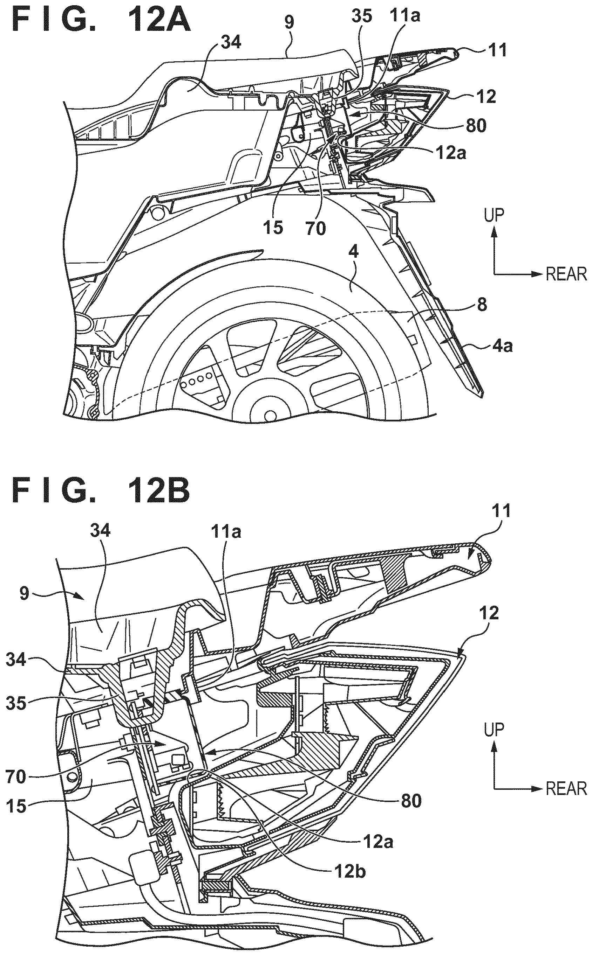

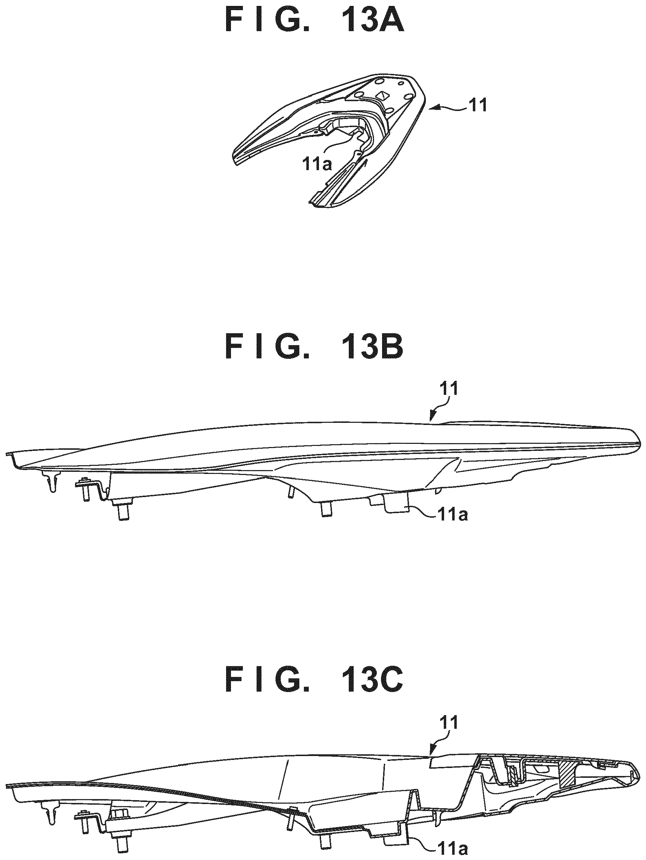

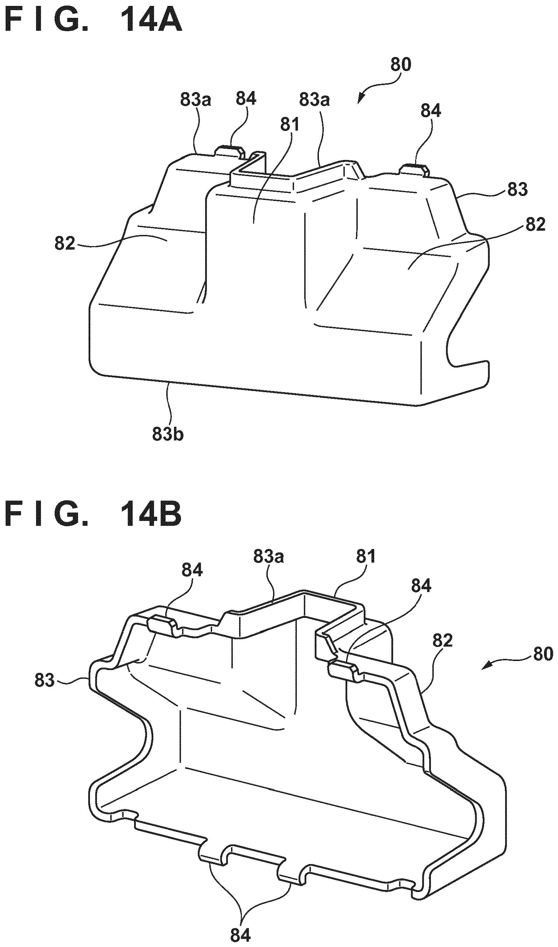

Fig. 10A shows a view showing a seat catch mechanism according to the embodiment. Fig. 10B shows a view showing a state in which the seat catch mechanism is covered with a seat catch cover. Fig. 11 is a view showing the positional relationship between the seat catch cover of the seat catch mechanism, the grab rail, and the tail light unit according to this embodiment. Fig. 12A shows a sectional view taken along a line iii - iii in Fig. 4. Fig. 12B shows an enlarged view of Fig. 12A. Fig. 13A shows a view of the outer appearance of the grab rail provided in the vehicle body rear portion according to the embodiment. Fig. 13B shows a side view of the grab rail according to the embodiment. Fig. 13C shows a side sectional view of the grab rail according to the embodiment. Fig. 14A shows a view of the outer appearance of the seat catch cover of the seat catch mechanism according to the embodiment viewed from the front side. Fig. 14B shows a view of the outer appearance of the seat catch cover of the seat catch mechanism according to the embodiment viewed from the back side.

In the seat 9 according to this embodiment, the anchor portion 35 that engages with the seat catch mechanism 70 on the vehicle body side is provided at the rear end of the seat base plate portion 34, as described above. In a state in which the seat 9 is located at the closed position P0, the anchor portion 35 has a positional relationship capable of engaging with a pair of lock plates 71 of the seat catch mechanism 70. The lock plates 71 are arranged to face each other and swingably axially supported by a base portion 72. The spring force of a coil spring 73 acts on the lock plates 71 in a direction to close the lock plates 71 (lock state). When the anchor portion 35 presses and rotates the lock plates 71 in a direction to open them against the spring force generated by the extension/contraction of the coil spring 73, an engaging state is obtained. In addition, when a key is inserted into the main switch (not shown) provided on the periphery of the handle cover 14, and a predetermined lock cancel operation is performed to make the lock plates 71 pivot in a direction to forcibly open them against the spring force of the coil spring 73, a lock cancel state is obtained. The seat catch mechanism 70 is firmly fixed to a rear frame 15 of the vehicle body rear portion. In the seat catch mechanism 70, the lock plates 71 are connected by a projecting portion 74 and a wire 75 so as to operate in cooperation with the main switch (key cylinder) provided on the periphery of the handle cover 14. In a state in which the key is not inserted into the main switch, the lock state in which the lock plates 71 of the seat catch mechanism 70 are physically fixed not to operate in the opening direction is set, and the engaging state with the anchor portion 35 is held. Additionally, when the key is inserted into the main switch, and a predetermined operation is performed, the fixing of the lock plates 71 of the seat catch mechanism 70 is canceled. When the seat 9 is raised, the engagement with the anchor portion 35 is canceled, and the unlock state in which the seat 9 can be opened is set. When the user performs the key operation, the lock state of the seat catch mechanism 70 is canceled. In the unlock state, the seat 9 can be opened/closed by the hinge mechanism 50, and a storage article can be put in or taken out from the luggage box 10.

The seat catch mechanism 70 has an outer shape projecting to the rear side of the vehicle body in the side view of the vehicle body. In this embodiment, the seat catch mechanism 70 is covered with a seat catch cover 80 so as not to be directly visible from the outside. As shown in Figs. 14A-14B, the seat catch cover 80 is a resin-molded component having a hollow box-like outer shape. To conform to the outer shape of the seat catch mechanism 70, a center portion 81 (in the vehicle width direction) viewed from the rear side of the vehicle body protrudes from above to the lower side, and the lower portion extends in the width direction at the same level so as to form a convex shape. The upper portion of the center portion 81 opens to allow the anchor portion 35 to enter or exit, and side portions 82 tilt frontward from above to the lower side so as to form a concave shape. In addition, a plurality of engaging portions 84 are formed on a peripheral portion 83 of the seat catch cover 80. The seat catch cover 80 is mounted on the seat catch mechanism 70 by engaging the engaging portions 84 with a plurality of engaging holes 72a formed in the base portion 72 of the seat catch mechanism 70.

The seat catch cover 80 has a blindfold function of preventing the seat catch mechanism 70 from being directly visible from the rear side of the vehicle body and is configured to, for example, prevent a third party from forcibly canceling the lock state of the seat catch mechanism 70 by inserting a long component into the gap between the grab rail 11 and the tail light unit 12. As shown in Figs. 10A-10B and 11, the seat catch cover 80 is arranged between the grab rail 11 provided on the upper side of the vehicle body rear portion and the tail light unit 12 provided on the rear side of the vehicle body rear portion. The periphery of an upper surface portion 83a of the seat catch cover 80 is surrounded by a curved rib portion 11a of the grab rail 11, and a lower surface portion 83b is provided near a housing 12a of the tail light unit 12 on the front side of the vehicle body. Note that the rib portion 11a of the grab rail 11 is used in this embodiment. However, a rib may be provided on an exterior component other than the grab rail and used.

The housing 12a of the tail light unit 12 is arranged close to the lower surface portion 83b of the seat catch cover 80 so as to cover the periphery of the lower surface portion 83b. In addition, the rib portion 11a provided on a part of the grab rail 11 is arranged to cove the periphery of the upper surface portion 83a of the seat catch cover 80. The section of the seat catch cover 80 has a convex shape in the side view of the vehicle body in a state in which the seat catch cover 80 is mounted on the seat catch mechanism 70, as shown in Figs. 12A-12B. Additionally, the seat catch cover 80 is arranged such that the lower surface portion 83b tilts upward to the rear side of the vehicle body in the side view of the vehicle body so as to conform to the housing 12a of the tail light unit 12. Moreover, a step portion 12b is formed on the housing 12a of the tail light unit 12 to cover the periphery of the lower surface portion 83b of the seat catch cover 80.

According to this embodiment, the seat catch mechanism 70 is covered with the seat catch cover 80 so as not to be directly visible from the outside. The seat catch cover 80 is arranged between the grab rail 11 and the tail light unit 12 in the vehicle body rear portion. The upper surface portion 83a of the seat catch cover 80 is surrounded by the rib portion 11a that is a part of the grab rail 11. The lower surface portion 83b of the seat catch cover 80 is provided near the housing 12a of the tail light unit 12 on the front side of the vehicle body.

As described above, since the seat catch cover 80 is not fastened by a bolt or the like and held close to the tail light unit 12, the number of components can be decreased.

In addition, according to the invention, the upper surface portion 83a of the seat catch cover 80 is covered with the rib portion 11a that is a part of the grab rail 11, so that the seat catch mechanism 70 is not directly visible between the grab rail 11 and the tail light unit 12 when viewed from the vehicle body rear portion. Hence, the anti-theft effect improves.

Furthermore, the housing 12a of the tail light unit 12 is arranged close to the lower surface portion 83b of the seat catch cover 80 so as to cover the periphery of the lower surface portion 83b.

Since the housing 12a of the tail light unit 12 thus limits the downward movement of the seat catch cover 80, the seat catch mechanism 70 cannot be accessed from the vehicle body rear portion, and the anti-theft effect improves.

In addition, since the housing 12a of the tail light unit 12 has a function of positioning and fixing the seat catch cover 80 to the seat catch mechanism 70, the number of components can be decreased.

In addition, since the seat catch cover 80 is held between the grab rail 11 and the tail light unit 12, the seat catch cover 80 is difficult to remove, and the anti-theft effect improves.

The periphery of the upper surface portion 83a of the seat catch cover 80 on the side of the vehicle body rear portion is covered with the rib portion 11a of the grab rail 11. Since the seat catch mechanism 70 is not directly visible between the grab rail 11 and the tail light unit 12 when viewed from the vehicle body rear portion, the anti-theft effect improves.

Since the seat catch cover 80 has a convex shape conforming to the side surface shape of the seat catch mechanism 70 in the side view of the vehicle body, no gap is formed between the seat catch cover 80 and the seat catch mechanism 70, and there is no room for a foreign matter to enter.

Also, the seat catch cover 80 is arranged such that the lower surface portion 83b tilts upward to the rear side of the vehicle body in the side view of the vehicle body so as to conform to the housing 12a of the tail light unit 12. Since the housing 12a of the tail light unit 12 thus limits the downward movement of the seat catch cover 80, the seat catch mechanism 70 is not directly visible from the vehicle body rear portion, and the anti-theft effect improves.

In addition, since the housing 12a of the tail light unit 12 has a function of positioning and fixing the seat catch cover 80 to the seat catch mechanism 70, the number of components can be decreased.

The above-described embodiment is an example of implementing the present invention, and the present invention is applicable to a revision or a modification of the embodiment without departing from the scope of the present invention as defined in the appended claims. For example, in this embodiment, an example in which the present invention is applied to a motorcycle has been described. However, the present invention is not limited to this, and is applicable to all straddle type vehicles.

The present invention is not limited to the above embodiments and various changes and modifications can be made within the scope of the following claims.

## Claims

1. A seat catch mounting structure of a straddle type vehicle, wherein
a storage portion (10) is provided under a seat (9), and the storage portion (10) is openable/closable by the seat (9),
a tail light unit (12) is provided on a rear side of the vehicle body rear portion,
a seat catch mechanism (70) is configured to hold the seat (9) in a lock state in which opening/closing of the seat (9) is disabled or in a lock cancel state in which the lock state is canceled is provided,
the seat catch mechanism (70) is covered with a seat catch cover (80) so as not to be visible from an outside,
a grab rail (11) is provided on an upper side of a vehicle body rear portion,
the seat catch cover (80) is arranged between the grab rail (11) and the tail light unit (12),
an upper surface portion (83a) of the seat catch cover (80) is surrounded by a part of the grab rail (11), and
a lower surface portion (83b) of the seat catch cover (80) is arranged close to a housing (12a) of the tail light unit (12) on a front side of a vehicle body,
**characterized in that**
a periphery of the upper surface portion (83a) of the seat catch cover (80) on a side of the vehicle body rear portion is covered with a rib portion (11a) that is a part of the grab rail (11), whereby the seat catch mechanism (70) is not directly visible between the grab rail (11) and the tail light unit (12) when viewed from the vehicle body rear portion.

2. The seat catch mounting structure of a straddle type vehicle according to claim 1, **characterized in that** the upper surface portion of the housing (12a) of the tail light unit (12) is arranged close to the lower surface portion (83b) of the seat catch cover (80) so as to cover a periphery of the lower surface portion (83b).

3. The seat catch mounting structure of a straddle type vehicle according to claim 1 or 2, **characterized in that** a section of the seat catch cover (80) along a longitudinal direction of the vehicle body has a convex shape.

4. The seat catch mounting structure of a straddle type vehicle according to any one of claims 1 to 3, **characterized in that** the seat catch cover (80) is arranged such that the lower surface portion (83b) tilts upward to a rear side of the vehicle body in a side view of the vehicle body so as to conform to the housing (12a) of the tail light unit (12).

## Patentansprüche

1. Sitzverschlussmontagestruktur eines Grätschsitzfahrzeugs, wobei
ein Lagerabschnitt (10) unter einem Sitz (9) vorgesehen ist, und der Lagerabschnitt (10) mit dem Sitz (9) öffenbar/schließbar ist,
eine Heckleuchteneinheit (12) an einer Rückseite eines Fahrzeugkörper-Heckabschnitts vorgesehen ist,
ein Sitzverschlussmechanismus (70) vorgesehen ist, der konfiguriert ist, um den Sitz (9) in einem Sperrzustand zu halten, in dem das Öffnen/Schließen des Sitzes (9) verhindert wird, oder in einem Sperraufhebezustand, in dem der Sperrzustand aufgehoben ist,
der Sitzverschlussmechanismus (70) mit einem Sitzverschlussdeckel (80) abgedeckt ist, sodass er von außen nicht sichtbar ist,
eine Griffschiene (11) an einer Oberseite des FahrzeugkörperHeckabschnitts vorgesehen ist,
der Sitzverschlussdeckel (80) zwischen der Griffschiene (11) und der Heckleuchteneinheit (12) angeordnet ist,
ein Oberflächenabschnitt (83a) des Sitzverschlussdeckels (80) von einem Teil der Griffschiene (11) umgeben ist, und
ein Unterflächenabschnitt (83b) des Sitzverschlussdeckels (80) nahe einem Gehäuse (12a) der Heckleuchteneinheit (12) an einer Vorderseite eines Fahrzeugkörpers angeordnet ist,
**dadurch gekennzeichnet, dass** eine Peripherie des Oberflächenabschnitts (83a) des Sitzverschlussdeckels (80) an einer Seite des Fahrzeugkörperheckabschnitts mit einem Rippenabschnitt (11a) bedeckt ist, der Teil der Griffschiene (11) ist, wodurch der Sitzverschlussmechanismus (70) zwischen der Griffschiene (11) und der Heckleuchteneinheit (12), bei Betrachtung von dem Fahrzeugkörper-Heckabschnitt, nicht direkt sichtbar ist.

2. Die Sitzverschlussmontagestruktur eines Grätschsitzfahrzeugs nach Anspruch 1, **dadurch gekennzeichnet, dass** der Oberflächenabschnitt des Gehäuses (12a) der Heckleuchteneinheit (12) nahe dem Unterflächenabschnitt (83b) des Sitzverschlussdeckels (80) angeordnet ist, um eine Peripherie des Unterflächenabschnitts (83b) zu bedecken.

3. Die Sitzverschlussmontagestruktur eines Grätschsitzfahrzeugs nach Anspruch 1 oder 2, **dadurch gekennzeichnet, dass** ein Abschnitt des Sitzverschlussdeckels (80) entlang einer Längsrichtung des Fahrzeugkörpers eine konvexe Form hat.

4. Die Sitzverschlussmontagestruktur eines Grätschsitzfahrzeugs nach einem der Ansprüche 1 bis 3, **dadurch gekennzeichnet, dass** der Sitzverschlussdeckel (80) derart angeordnet ist, dass, in Seitenansicht des Fahrzeugkörpers, der Unterflächenabschnitt (83b) zu einer Rückseite des Fahrzeugkörpers so aufwärts geneigt ist, dass er zu dem Gehäuse (12a) der Heckleuchteneinheit (12) passt.

## Revendications

1. Structure de montage de dispositif d'arrêt de siège d'un véhicule de type à selle, dans laquelle
une portion de stockage (10) est prévue sous un siège (9), et la portion de stockage (10) peut être ouverte/fermée par le siège (9),
une unité de feu rouge arrière (12) est prévue sur un côté arrière de la portion arrière de corps de véhicule,
un mécanisme de dispositif d'arrêt de siège (70) est configuré pour maintenir le siège (9) dans un état de verrouillage dans lequel l'ouverture/la fermeture du siège (9) est désactivée ou dans un état d'annulation de verrouillage dans lequel l'état de verrouillage est annulé est prévu,
le mécanisme de dispositif d'arrêt de siège (70) est recouvert d'un couvercle de dispositif d'arrêt de siège (80) de manière à ne pas être visible depuis un extérieur,
un rail de préhension (11) est prévu sur un côté supérieur d'une portion arrière de corps de véhicule,
le couvercle de dispositif d'arrêt de siège (80) est agencé entre le rail de préhension (11) et l'unité de feu rouge arrière (12),
une portion de surface supérieure (83a) du couvercle de dispositif d'arrêt de siège (80) est entourée par une partie du rail de préhension (11), et
une portion de surface inférieure (83b) du couvercle de dispositif d'arrêt de siège (80) est agencée à proximité d'un boîtier (12a) de l'unité de feu rouge arrière (12) sur un côté avant d'un corps de véhicule,
**caractérisée en ce que**
une périphérie de la portion de surface supérieure (83a) du couvercle de dispositif d'arrêt de siège (80) sur un côté de la portion arrière de corps de véhicule est recouverte d'une portion à nervure (11a) qui est une partie du rail de préhension (11), moyennant quoi le mécanisme de dispositif d'arrêt de siège (70) n'est pas directement visible entre le rail de préhension (11) et l'unité de feu rouge arrière (12) lorsqu'il est observé depuis la portion arrière de corps de véhicule.

2. Structure de montage de dispositif d'arrêt de siège d'un véhicule de type à selle selon la revendication 1, **caractérisée en ce que** la portion de surface supérieure du boîtier (12a) de l'unité de feu rouge arrière (12) est agencée à proximité de la portion de surface inférieure (83b) du couvercle de dispositif d'arrêt de siège (80) de manière à recouvrir une périphérie de la portion de surface inférieure (83b).

3. Structure de montage de dispositif d'arrêt de siège d'un véhicule de type à selle selon la revendication 1 ou 2, **caractérisée en ce qu'**une section du couvercle de dispositif d'arrêt de siège (80) le long d'une direction longitudinale du corps de véhicule présente une forme convexe.

4. Structure de montage de dispositif d'arrêt de siège d'un véhicule de type à selle selon l'une quelconque des revendications 1 à 3,
**caractérisée en ce que** le couvercle de dispositif d'arrêt de siège (80) est agencé de telle sorte que la portion de surface inférieure (83b) bascule vers le haut vers un côté arrière du corps de véhicule dans une vue latérale du corps de véhicule de manière à se conformer au boîtier (12a) de l'unité de feu rouge arrière (12).
